# EUROPÄISCHE PATENTSCHRIFT

(11) **EP 1 554 856 B1**
(45) Veröffentlichungstag und Bekanntmachung des Hinweises auf die Patenterteilung: **02.04.2008**
(21) Anmeldenummer: 03770976.3
(22) Anmeldetag: 27.10.2003
(51) Int. Cl.: H04L 12/437, G06F 12/14, H04L 29/14, H04L 29/06

(54) **Intelligenter Netzwerk Interface Controller**
Intelligent network Interface controller
Controleur d'interface réseau intelligent

(30) Priorität: 29.10.2002 DE 10250536
(43) Veröffentlichungstag der Anmeldung: 20.07.2005
(73) Patentinhaber: SMSC Europe GmbH, 76185 Karlsruhe (DE)
(72) Erfinder: HETZEL, Herbert, 76885 Schweigen-Rechtenbach (DE); KLOS, Rainer, 76275 Ettlingen-Oberweier (DE); HECK, Patrick, 76448 Durmersheim (DE); THIEL, Christian, 83098 Brannenburg (DE)
(74) Vertreter: Lohr, Georg
(86) Internationale Anmeldenummer: PCT/EP2003/011894
(87) Internationale Veröffentlichungsnummer: WO 2004/040875

(56) Entgegenhaltungen:
- WO-A-02/31656
- US-B1- 6 199 174
- US-B1- 6 457 056
- H. KOPETZ, G. BAUER: "The Time-Triggered Architecture" INTERNET, [Online] Juni 2002 (2002-06), XP002272118 Vienna Gefunden im Internet: URL:https://www.decos.at/download/TTA.RR-2 001-22.pdf_1.pdf> [gefunden am 2004-03-01]
- KOPETZ H ET AL: "The transparent implementation of fault tolerance in the time-triggered architecture" 6. Januar 1999 (1999-01-06), DEPENDABLE COMPUTING FOR CRITICAL APPLICATIONS 7, 1999 SAN JOSE, CA, USA 6-8 JAN. 1999, PISCATAWAY, NJ, USA,IEEE, US, PAGE(S) 191-205 , XP010366438 ISBN: 0-7695-0284-9 * das ganze Dokument *
- AUSTRIA MICROSYSTEMS: "TTP/C-C2 Communication controller" INTERNET ARTICLE, [Online] Mai 2002 (2002-05), Seiten 1-13, XP002351955 Internet Gefunden im Internet: URL:http://micro.cti.ac.at/fileadmin/ME/FI LES/R&D/TTA/AS8202_TTTP_C_C2.pdf> [gefunden am 2005-11-01]
- BAUER G ET AL: "Assumption coverage under different failure modes in the time-triggered architecture" 15. Oktober 2001 (2001-10-15), EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, PAGE(S) 333-341 , XP010588987 ISBN: 0-7803-7241-7 * das ganze Dokument *
- BAUER G ET AL: "Transparent redundancy in the time-triggered architecture" 25. Juni 2000 (2000-06-25), DEPENDABLE SYSTEMS AND NETWORKS, 2000. DSN 2000. PROCEEDINGS INTERNATIONAL CONFERENCE ON NEW YORK, NY, USA 25-28 JUNE 2000, LOS ALAMITOS, CA, USA,IEEE COMPUT. SOC, US, PAGE(S) 5-13 , XP010504310 ISBN: 0-7695-0707-7 * das ganze Dokument *

## Beschreibung

### Technisches Gebiet

Die Erfindung betrifft ein Netzwerkinterface sowie ein Netzwerk und ein Verfahren zur Herstellung eines Netzwerks zur gesicherten Datenübertragung.

### Stand der Technik

Es gibt eine Vielzahl unterschiedlicher Netzwerktypen für die unterschiedlichsten Anwendungsfälle. Entsprechend variieren auch die Anforderungen an Zuverlässigkeit und Übertragungssicherheit. So können beispielsweise zur Übertragung von E-Mails relativ geringe Anforderungen an das Netzwerk gestellt werden. Im Gegensatz hierzu werden an Netzwerke, die zur Übertragung sicherheitsrelevanter Daten beispielsweise in Kraftfahrzeugen eingesetzt werden, höchste Anforderungen gestellt.

Um eine hohe Übertragungssicherheit zu gewährleisten, müssen sowohl die Hardware als auch die Software des Netzwerkes entsprechend ausgelegt werden.

Die nachfolgenden Ausführungen beziehen sich unter anderem auf das OSI - Referenzmodell (basic reference model "open systems interconnection") der ISO. Darin erfolgt die Unterteilung von Kommunikationsarchitekturen in sieben Schichten (Layer).

Entsprechend dieser Schichten sind unterschiedliche Maßnahmen zur Gewährleistung einer bestimmten übertragungssicherheit bekannt. In den nachfolgenden Ausführungen wird auf den Begriff Layer auch in dem Sinne der Bedeutung von Instanzen des Layers Bezug genommen.

So ist in dem Datenblatt TLE 6254-2G vom 30.4.2002 der Infineon Technologies AG, München ein "Fault Tolerant Differential CAN - Transceiver" beschrieben. Dieser Transceiver erkennt unterschiedliche Fehlerzustände der zur Signalübertragung verwendeten Leitungen und steuert, falls möglich, nicht gestörte Leitungen derart an, dass durch diese noch Signale übertragen werden können.

Eine Applikation dieses Bausteins ist in Fig. 6 des Datenblattes angegeben. Darin wird der CAN - Transceiver mittels eines Mikroprozessors mit integriertem CAN-Modul angesteuert. Diese Anordnung hat nun den Vorteil, dass im Falle von Störungen des Leitungssystems in vielen Fällen noch eine Signalübertragung möglich ist. Allerdings ist hier kein Schutz vor Fehlern in der Software des Mikroprozessors vorgesehen. Ist beispielsweise der Mikroprozessoren durch die Ausführung von Applikationsdiensten derart beansprucht bzw. überlastet, so dass er auf die Bussignale nicht mehr reagieren kann, so ist auch keine Kommunikation über den Bus mehr möglich.

Weitaus schwerwiegender sind die Auswirkungen von Fehlern, in denen die Übertragung des gesamten Bussystems gestört wird. Dies kann beispielsweise der Fall sein, wenn im Fehlerfalle ein kontinuierlicher, nicht dem Standard entsprechender Datenstrom auf den Bus ausgegeben wird. Ein solcher Datenstrom könnte beispielsweise durch fehlerhaftes Verhalten des den CAN - Transceiver steuernden Mikroprozessors erzeugt werden. Wird der Bus durch eine solche Datenstrom blockiert, so können auch andere Teilnehmer nicht mehr miteinander kommunizieren. Hat der zuerst beschriebene Fehlerfall der Überlastung des Mikroprozessors ausschließlich Auswirkungen auf den Busteilnehmer, der diesen Mikroprozessor enthält, so kann ein Fehler, wie er im zweiten Fall beschrieben ist, ein ganzes Bussystem blockieren und zum Ausfall wichtiger Funktionalitäten des Systems führen. Ein solcher Zustand ist gerade bei Sicherheitskritischen Anwendungen, wie sie beispielsweise in Kraftfahrzeugen vorkommen, nicht akzeptabel.

Um derartige Fehler auf ein akzeptables Maß zu reduzieren, muss ein ausführlicher Test der gesamten Software des Mikroprozessors erfolgen. In diesem Test müssen nicht nur die für die Kommunikation über den Bus relevanten Funktionen, sondern alle Funktionen getestet werden. Dies ist notwendig, da prinzipiell jeder Code in dem Mikroprozessor Zugriff auf die Hardwarefunktionen des Busses hat oder zumindest durch eine Überlastung des Mikroprozessors zu einem Versagen der Bedienung des Busses führen kann. Daraus ergibt sich insbesondere in komplexen Netzwerken mit einer Vielzahl unterschiedlicher Knoten eine kaum mehr lösbare Aufgabe, da beim Test alle möglichen Zustände aller Knoten berücksichtigt werden müssten. Dies führt in der Praxis dazu, dass Tests basierend auf vereinfachenden Annahmen durchgeführt werden. Es bleibt dennoch ein hoher Testaufwand mit einem unbefriedigenden Ergebnis.

In dem Datenblatt "C167CR, C167SR 16-Bit Single-Chip Microcontroller" 07/2001 der Infineon Technologies AG, München ist beispielhaft ein typischer Microcontroller mit integriertem CAN-Interface beschrieben. Dieser weist ein internes CAN-Modul auf, welches in der Lage ist, selbstständig Daten auszusenden bzw. zu empfangen. Wie aus der Tabelle 7 dieses Datenblatts ersichtlich ist, wird das CAN-Modul direkt in den linearen Adressraum des Microcontrollers abgebildet. Damit können beliebige Elemente des Codes absichtlich bzw. unabsichtlich auf diesen zugreifen. Besonders kritisch sind beispielsweise Berechnungsfehler bei indirekter Adressierung. Da hier das CAN-Modul im linearen Adressraum liegt, könnte ein solcher Adressierungsfehler zu einer Störung des ganzen Busses führen. Wird beispielsweise unbeabsichtigt der Bustakt verändert, so kann die Einspeisung von Daten mit falscher Taktfrequenz eine Kommunikation des gesamten Bussystems zu erliegen bringen.

Ein anderer Fall einer möglichen Störung ergibt sich, wenn beispielsweise auf Grund eines Fehlers in einer Applikation bzw. durch einen Benutzer ein Reset eines Teilnehmers samt Netzwerk-Interface ausgelöst wird. Hier fällt der Teilnehmer aus dem Netzwerk-Verbund und muss erneut hinein synchronisiert werden. Gerade im Falle von Netzen mit einer Ringarchitektur kann dieses zu einem Ausfall der Übertragung für die Zeit des Bootvorgangs bis zur neuen Synchronisation bedeuten. Da diese Vorgänge oft mehrere Sekunden bis Minuten dauern können, ist ein solcher Ausfall eines ganzen Netzes, wie es beispielsweise in Kraftfahrzeugen eingesetzt wird, nicht akzeptabel. Ist auf Grund des Fehlers im Teilnehmer dieser Startvorgang nicht mehr möglich, so kann dies zu einer dauernden Beeinträchtigung bzw. zu einem Totalausfall des Netzwerkes führen.

Die hier am Beispiel eines CAN-Busses beschriebene Problematik tritt selbstverständlich auch bei den anderen bekannten Bussen auf. Ein Beispiel für das Ethernet zeigt das Datenblatt "DP83820 10/100/1000 MB/s PCI Ethernet Network Interface Controller", Feb. 2001, National Semiconductor Corporation. Hierin wird ein Network Interface Controller beschrieben, welcher mittels eines integrierten PCI-Bus Interfaces direkt in den linearen Adressraum eines Mikroprozessors abgebildet wird.

In der US 6,457,056 B1 ist ein Network Interface Controller beschrieben, auf welchen ein Mikroprozessor unmittelbar über den Systembus zugreifen kann. Damit ergibt sich auch hier die gleiche Problematik, wie im zuvor beschriebenen Fall des CAN-Interfaces.

Um grundsätzlich die Zuverlässigkeit von Rechnersystemen zu verbessern, haben bestimmte Betriebssysteme einen sogenannten "Protected Mode" für wichtige Teile des Betriebssystemkerns. Da bei dieser Lösung Treiber für die gesamte Hardware eines Rechnersystems eingeschlossen sind, ist dieser Betriebssystemkern groß und somit auch wieder fehleranfällig. Tritt ein Fehler innerhalb dieses Kerns, beispielsweise durch fehlerhafte Software oder auch durch Fehler in einer beliebigen Hardwarekomponente auf, so kann dieser dazu führen, dass das Netzwerkinterface nicht mehr bedient wird. Dies wiederum kann zu den von zuvor beschriebenen Störungen des gesamten durch das Netzwerk verbundenen Systems führen. Zudem erfolgt bei diesen Betriebssystemen die Aufteilung zwischen den Teilen, welche im Protected Mode ausgeführt werden und dem Rest primär unter dem Aspekt einfacher Programmierschnittstellen und weniger unter dem Sicherheitsaspekt. So ist beispielsweise zur konventionellen Netzwerkanbindung von PCs nur der Treiber für die Hardware im Protected Mode vorgesehen, während andere wesentliche Funktionalitäten, wie beispielsweise der TCP-IP Stack auf konventionelle Weise im Betriebssysteme implementiert ist.

In der US 6,199,174 B1 ist ein fehlertolerantes Bussystem mit Umschaltvorrichtungen offenbart, welche im Fehlerfalle einen Beipass zum defekten Kommunikations-IC schalten. Hier kann eine CPU auf verschiedenen Wegen in die verschiedenen Layer des Kommunikationssystems eingreifen und beispielsweise den optischen Sender und den optischen Empfänger mit dem Kommunikations-IC verbinden oder über einen Beipass zusammenschalten.

In der KOPETZ H ET AL: "The transparent implementation of fault tolerance in the timetriggered architecture"; DEPENDABLE COMPUTING FOR CRITICAL APPLICATIONS 7, 1999 SAN JOSE, CA, USA 6-8 JAN. 1999, PISCATAWAY, NJ, USA, IEEE, US, PAGE(S) 191-205 ist ein Netzwerkinterface offenbart, das eine funktionell gekapselte Einheit beinhaltet.

Das Dokument AUSTRIA MICROSYSTEMS: "TTP/C-C2 Communication controller" INTERNET ARTICLE, Seiten 1-13 beschreibt ein Netzwerkinterface, das einen Reset des Netzwerkinterfaces vorsieht.

### Darstellung der Erfindung

Der Erfindung liegt die Aufgabe zugrunde, ein Netzwerk beziehungsweise die zugehörigen Netzwerkinterfaces derart zu gestalten, dass eine hohe Übertragungssicherheit und Störfestigkeit des gesamten Bussystems bei minimalem Testaufwand erreicht wird.

Eine erfindungsgemäße Lösung dieser Aufgabe ist in dem unabhängigen Patentanspruch angegeben. Weiterbildungen der Erfindung sind Gegenstand der abhängigen Ansprüche.

Das Netzwerkinterface hat eine zusätzliche Überwachungseinrichtung innerhalb der gekapselten Einheit zur Überwachung der Funktion bzw. bestimmter Betriebsparameter von Komponenten außerhalb der gekapselten Einheit wobei im Fehlerfalle eine Signalisierung des Fehlers sowie wahlweise einen Reset der betroffenen Komponenten erfolgt.

Die Kapselung der Einheit reicht vom OSI-Layer 1 bis zum OSI-Layer 3.

Ein erfindungsgemäßes Netzwerkinterface umfasst eine funktionell gekapselte Einheit, welche die zur Sicherstellung einer Mindestfunktionalität des Netzwerkinterfaces notwendigen Bestandteile umschließt. Dabei ist von außerhalb der gekapselten Einheit ein Zugriff auf das Interface nur über spezielle freigegebene Dienste

möglich. Zugriffe über andere Dienste oder auch direkt auf die Hardware des Netzwerkinterfaces sind nicht möglich.

Durch diese Beschränkung des Zugriffs wird die Stabilität eines Bussystems, welches mit erfindungsgemäßen Netzwerkinterfaces aufgebaut ist, ausschließlich durch die gekapselten Komponenten der Netzwerkinterfaces bestimmt. Damit ist es nun möglich, die Hardware bzw. Software innerhalb der Kapselung zu entwickeln und zu testen. Die Komplexität der Tests ist wesentlich geringer als beim Stand der Technik, da die Auswirkungen der übergeordneten Layer wie beispielsweise der Applikationen nicht mehr oder nur bedingt berücksichtigt werden müssen. Diese können nun durch die Kapselung nicht mehr auf untergeordnete Layer direkt zugreifen und somit die Kommunikation des Netzwerks negativ beeinflussen. So würde sich erfindungsgemäß bei Anwendungen entsprechend den oben im Stand der Technik dargestellten Beispielen ein Register zur Steuerung der Datenrate des Netzwerkes sicherlich innerhalb des gekapselten Bereiches befinden, da durch einen direkten Zugriff auf dieses Register die Funktion des gesamten Netzwerks gefährdet wäre.

Zudem kann die gekapselte Einheit selbst autark arbeiten und somit auch ohne Interaktion mit einem angeschlossenen Gerät die notwendigen Netzwerkfunktionen aufrechterhalten.

Eine Kapselung kann beispielsweise durch geeignete Hardware erfolgen. Ein Beispiel hierfür wäre ein integrierter Network Interface Controller, welcher die Komponenten des Layers 1 (Physical Layer) und die Komponenten des Layers 2 (Data Link) enthält, wobei von außen durch einen externen Microcontroller ausschließlich auf die Instanzen der Dienste des Layers 2 zugegriffen werden kann. Anstelle des Layers 2 könnte hier selbstverständlich auch jeder andere Layer bis zum Layer 7 stehen.

Ebenso könnte eine Kapselung beispielsweise innerhalb eines Microcontrollers, bei dem ein Network Interface Controller in den linearen Adressraum abgebildet ist, durch einen "Protected Mode" erfolgen. Dieser erfindungsgemäße Protected Mode ist nicht zu verwechseln mit den aus dem Stand der Technik bekannten Protected Modes, welche regelmäßig größere Teile des Betriebssystems und insbesondere sämtliche Hardwaretreiber mit einschließen. Eine erfindungsgemäßer Protected Mode bezieht sich ausschließlich auf das Netzwerk, er umfasst vorzugsweise keine anderen Komponenten, insbesondere andere Hardware-Treiber. Hierbei ist nur ein Zugriff auf dem Network Interface Controller im Protected Mode möglich. Hierzu werden die Instanzen der Layers innerhalb der Kapselung in diesem Protected Mode ausgeführt. Aus dem übrigen Teilen des Codes ist kein Zugriff auf den Network Interface Controller möglich. Hier schließt der Begriff der Kapselung auch die Bereitstellung von Ressourcen zur Echtzeitbedienung des Netzwerkinterfaces mit ein. Dies bedeutet, dass auch entsprechende Interrupts in diesem Protected Mode ausführbar sind bzw. entsprechende zeitscheiben zur Ausführung des Protected Mode zur Verfügung stehen.

Grundsätzlich werden die wesentlichen, echtzeitkritischen Arbeiten, wie z. B. Empfang von Daten, Überprüfung der Daten auf Korrektheit, Handshaking, oder auch die Anforderung von Wiederholungen im Fehlerfall innerhalb der Kapselung ausgeführt. Durch Sicherstellen der Echtzeitfähigkeit lässt sich ein wesentlich höherer Datendurchsatz erreichen. So kann beispielsweise ein integrierter Network Interface Controller, der alle diese Funktionen bereits integriert, einem damit verbundenen Host-Controller komplett korrekt empfangene, größere Datenpakete über ein Highspeed-Interface übergeben bzw. zur Aussendung übernehmen.

Die Kapselung selbst kann eine den jeweiligen Anforderungen angepasste Form aufweisen. So sind zweckmäßigerweise diejenigen Bestandteile der Hardware und Software, die zur Aufrechterhaltung der Funktionalität des Netzwerkinterfaces notwendig sind, innerhalb der Kapselung eingeschlossen. Dies kann beispielsweise bedeuten, dass die gesamte Hardware (OSI-Layer 1), Teile der Layer 2, 3, 4, möglicherweise bis hin zu Teilen des Layers 7 mit eingeschlossen sind. Andere Teile dieser Layer können sich aber auch entsprechend den Anwendungsfällen außerhalb der Kapselung befinden.

In einer besonders vorteilhaften Ausgestaltung der Erfindung reicht die Kapselung hierbei von einem unteren OSI-Layer M bis zu einer Teilmenge eines oberen OSI-Layers N, wobei N ≥ M ist. Dabei ist der untere Layer M der unterste für den Datentransport benötigte Layer.

Der obere Layer M kann identisch mit N sein, liegt aber bevorzugt darüber. Somit umfasst die Kapselung zumindest einen, bevorzugt aber mehrere Layer. Von außerhalb der gekapselte Einheit sind Zugriffe ausschließlich über die Instanzen der Dienste des obersten Layers N möglich.

In einer weiteren vorteilhaften Ausgestaltung der Erfindung erfolgt für den Fall, dass ein Layer 1 (Physical Layer) vorgesehen ist, die Kapselung beginnend mit diesem Layer M = 1 bis zu einer vorgegebenen Teilmenge eines oberen Layers N ≥ 2. Eine Kombination der Layer 1 und 2 sowie optional weiterer Layer ist besonders sinnvoll, da erst in Verbindung dieser Layer eine hinreichend gesicherte Datenübertragung möglich ist.

Eine andere Ausgestaltung der Erfindung betrifft die Übertragung von synchronen Streams. Diese werden beispielsweise dazu verwendet, Multimedia-Daten in Echtzeit zwischen verschiedenen Teilnehmern zu übertragen. Die Verwaltung dieser synchronen Streams ist echtzeitkritisch und erfordert eine besondere Behandlung des Netzwerkverkehrs. Gerade bei zumindest logischen Ringnetzwerken werden hier höchste Anforderungen an jeden Netzwerkknoten gestellt, da auch Netzwerknoten mit Applikationen, welche relativ geringe Anforderungen an die zu übertragenden Datenvolumen bzw. Echtzeitfähigkeit stellen, diese Streams übertragen und richtig routen müssen. Um hier einen besonderen Schutz vor ungewollten Störungen zu erzielen, sind diese in die gekapselte Einheit eingeschlossen.

Eine weitere Ausgestaltung der Erfindung besteht darin, dass zusätzliche Überwachungs- und Steuerungsfunktionen innerhalb der gekapselten Einheit vorgesehen sind. Durch derartige Funktionen lässt sich einerseits die Schnittstelle zu übergeordneten Layern überwachen, um Störungen durch fehlerhafte Aufrufe beziehungsweise fehlerhafte Parameter zu vermeiden. Weiterhin kann mit diesen Überwachungs- und Steuerungsfunktionen eine Kontrolle der Instanzen der gekapselten Einheit erfolgen. So ist beispielsweise eine Überwachung der physikalischen Netzwerkverbindung möglich. Zusätzlich ist auch eine Kontrolle der Funktionen übergeordneter Instanzen möglich. So kann beispielsweise der Ausfall von Funktionen in übergeordneten Instanzen festgestellt werden und als Konsequenz eine Betriebsart für einen Notbetrieb der Netzwerkfunktionen aktiviert werden.

Die Überwachung der Funktionen in übergeordneten Instanzen kann beispielsweise durch einen Watchdog - Timer erfolgen. Im Normalbetrieb wird dieser durch regelmäßige Aktionen bzw. Aufrufe aus übergeordneten Instanzen getriggert. Erhält dieser Timer durch den Ausfall von Funktionen in übergeordneten Instanzen keine Triggersignale mehr, so löst er nach einem vorgegebenen Zeitintervall einen Notbetrieb der Netzwerkfunktionen aus. Werden die Funktionen der höheren Instanzen wieder verfügbar, so triggern diese den Watchdog - Timer erneut, worauf dieser nun den Notbetrieb deaktiviert.

Nach der Erfindung hat die gekapselte Einheit zusätzliche. Überwachungs- und Steuerungsfunktionen zur Sicherstellung einer vorgegebenen Basisfunktionalität ausgestaltet. Diese Basisfunktionalität erlaubt eine Kommunikation mit dem Netzwerkinterface, auch wenn mit der gekapselten Einheit verbundene bzw. kommunizierende Hardware- und Softwarekomponenten nicht oder nicht ordnungsgemäß arbeiten. So kann beispielsweise mit Hilfe dieser Basisfunktionalität eine Funktionsdiagnose des Netzwerkinterfaces bzw. des damit verbundenen Gerätes erfolgen. Ebenso kann hierdurch beispielsweise ein gezieltes Hoch- oder Herunterfahren des Bussystems erfolgen.

In einer weiteren Ausgestaltung der Erfindung ist vorzugsweise für den Einsatz in Netzwerken mit zumindest einer logischen Ringstruktur eine Funktion zur Paketweiterleitung innerhalb der gekapselten Einheit vorgesehen. Dadurch ist auch im Falle eines defekten, überlasteten, oder eine sonstige Fehlfunktion aufweisenden Microcontrollers eine Weiterleitung der Datenpakete möglich. Es wird die Funktionalität des Netzwerks durch Störungen in einzelnen Knoten nicht beeinträchtigt, da diese immer noch in der Lage sind, empfangene Datenpakete im Ring weiterzuleiten.

Eine andere Ausgestaltung der Erfindung sieht innerhalb der gekapselten Einheit eine Funktion vor, mit deren Hilfe ein Reset der Komponenten beziehungsweise Funktionen innerhalb der gekapselten Einheit ermöglicht wird. Die Auslösung des Resets erfolgt mittels eines Kommandos, welches über das Netzwerk übertragen wird. Dadurch können die Komponenten des Netzwerks wieder in einen definierten Ausgangszustand gebracht werden.

In einer weiteren Ausgestaltung der Erfindung weist die gekapselten Einheit zusätzliche Mittel zur Signalisierung eines Resets an externe Komponenten auf. Die Signalisierung kann wahlweise durch Hardware, beispielsweise mittels einer Signalisierungsleitung oder auch durch Software, beispielsweise durch Flags, Messages etc. erfolgen. Grundsätzlich können beim Reset auch verschiedene Stufen vorgesehen sein. So könnte beispielsweise ein Reset eines bestimmten Teils eines angeschlossenen Gerätes mittels Software signalisiert werden, während im Falle einer schweren Störung ein vollständiger Reset durch eine Hardware- Leitung signalisiert wird. Auch hier kann der Reset beispielsweise durch ein über das Netzwerk übertragenes Kommando ausgelöst werden.

In einer anderen Ausgestaltung der Erfindung ist eine zusätzliche Überwachungseinrichtung zur wahlweisen Überwachung der Funktionen der gekapselten Einheit, des Netzwerksverkehrs bzw. der Funktionen einzelner Knoten vorgesehen. Eine solche Überwachungsvorrichtung ist vorteilhafterweise in der gekapselten Einheit eines Knotens vorgesehen, kann aber auch in mehreren Knoten vorhanden sein. Ist der Datenverkehr bzw. das Verhalten einzelner Knoten fehlerhaft, so wird von der zusätzliche Überwachungsvorrichtung wahlweise ein Befehl zum Reset einzelner Knoten, der daran angeschlossenen Geräte oder auch des ganzen mit dem Netzwerk verbundenen Systems abgesetzt. Entsprechend dem erkannten Fehler bzw. der erkannten Fehlfunktion setzt sich die gekapselte Einheit auch selbst zurück. Wahlweise wird eine Fehlermeldung bzw. ein Bericht der Aktionen in einen Speicher abgelegt bzw. an einen oder mehrere vorgegebenen Knoten des Netzwerks übermittelt. Die Überwachung kann über geeignete Software bzw. auch durch einen Watchdog-Timer erfolgen.

Eine andere Ausgestaltung der Erfindung sieht Mittel zur Überwachung der Komponenten außerhalb der Kapselung vor. So kann beispielsweise durch das Netzwerkinterface eine Applikation in ihrer Funktion überwacht werden. Da das Netzwerkinterface innerhalb der Kapselung einen gesicherten, echtzeitfähigen Betrieb gewährleistet, kann von diesem aus auch ein einwandfreies Funktionieren bzw. die Einhaltung von bestimmten Anforderungen, wie beispielsweise an die Reaktionszeit überprüft werden. Werden die Anforderung nicht eingehalten, so kann dies an die entsprechenden Komponenten (Hardware bzw. Software) signalisiert werden. Hiermit ist neben einem fehlertoleranten Betrieb ein besonders einfaches Debugging möglich. Ebenso kann dies an andere Netzwerkknoten oder eine zentrale Überwachungseinheit signalisiert werden. Wahlweise kann ein Reset der fehlerhaft arbeitenden Komponenten erfolgen. Hierbei muss nicht das gesamte Gerät zurückgesetzt werden, vielmehr genügt es häufig, tatsächlich die fehlerhaft arbeitenden Komponenten zurückzusetzen. Ein solcher Reset kann auch mehrstufig entsprechend dem Fehler beziehungsweise der betroffenen Komponenten erfolgen.

In einer weiteren vorteilhaften Ausgestaltung der Erfindung ist die gekapselte Einheit als Komponente in ein Gerät integriert. Hierbei weisen optional die zur Aufrechterhaltung einer Basisfunktionalität notwendigen Hardwarekomponenten der gekapselten Einheit eine eigene Stromversorgung, die unabhängig von der Stromversorgung des restlichen Gerätes ist, auf. Somit kann beispielsweise im Falle eines Ringbusses auch bei ausgeschaltetem Gerät eine Paketweiterleitung erfolgen, da die gekapselten Einheit umfassend zumindest eine Teilmenge der Layer 1 und 2 eine eigene Stromversorgung aufweist und damit unabhängig von dem restlichen Gerät arbeiten kann.

In einer andern vorteilhaften Ausgestaltung der Erfindung wird ein optischer Bus zur Datenübertragung eingesetzt. Dabei ist die gekapselte Einheit derart ausgestaltet, das sie die optischen Komponenten umfasst und die ausschließliche Kontrolle über den optischen Sender ausübt. Damit erfolgt über die gekapselte Einheit nicht nur die Steuerung der optischen Ausgangsignale, sondern auch die Aktivierung des optischen Senders an sich. Somit kann beispielsweise zur Energieeinsparung in Betriebspausen der Sender abgeschaltet werden. Würde der Sender von einer getrennten Steuerschaltung aktiviert bzw. deaktiviert, so könnte beispielsweise im Falle eines Ringbusses die Weiterleitung der Pakete nicht sichergestellt werden.

In einer weiteren vorteilhaften Ausgestaltung der Erfindung weist die gekapselte Einheit ein nachrichtengesteuertes Interface auf. Diese Steuerung über Nachrichten stellt einen wesentlich robusteren und zuverlässigeren Mechanismus als die bisher dem Stand der Technik entsprechende Steuerung für Netzwerk Interface Controller über Register dar. Zudem ist diese Art der Signalisierung konsistent mit den Mechanismen moderner Betriebssysteme.

In einer anderen vorteilhaften Ausgestaltung der Erfindung weist die gekapselte Einheit ein objektorientiertes Interface auf. Erfindungsgemäß sind Zugriffe nur auf freigegebene Objekte möglich. In einem solchen objektorientierten Interface kann sogar das Netzwerk-Interface selbst als funktionales Objekt dargestellt sein.

In einer weiteren vorteilhaften Ausgestaltung der Erfindung ist der Network Interface Controller bzw. Teile davon über das Netzwerk neu konfigurierbar bzw. programmierbar. So können wahlweise neue Betriebsparameter, wie auch der Code von Firmware oder Software über das Netzwerk heruntergeladen und beispielsweise in einen wiederbeschreibbaren Speicher (Flash-PROM) abgelegt werden. Dieser Vorgang kann optional auch über einen Broadcast zur gleichzeitigen Programmierung mehrerer Knoten erfolgen.

Ein erfindungsgemäßer Netzwerkknoten weist einen Netzwerkcontroller auf, welcher eine funktionell gekapselte Einheit umfasst, die alle zur Sicherstellung einer Mindestfunktionalität des Netzwerkinterfaces notwendigen Bestandteile enthält. Hierbei ist von außerhalb der gekapselten Einheit ausschließlich ein Zugriff über spezielle freigegebene Dienste (8a, 8b) möglich. Zusätzlich zum Netzwerkcontroller kann der Netzwerkknoten beliebige Applikationen in Hardware bzw. Software, wie beispielsweise PC, Radio, Monitor, DVD-Player oder auch nur die Steuerung einfacher Komponenten, wie elektrischer Fensterheber oder Beleuchtungseinrichtungen etc. aufweisen.

Erfindungsgemäß weist ein Netzwerk zur Verbindung von wenigstens zwei Knoten wenigstens einen Knoten mit einer funktionell gekapselten Einheit auf. Diese funktionell gekapselte Einheit umfasst alle zur Sicherstellung einer Mindestfunktionalität des Netzwerkinterfaces notwendigen Bestandteile, wobei von außerhalb der gekapselten Einheit ausschließlich ein Zugriff über spezielle freigegebene Dienste (8a, 8b) möglich ist.

Ein erfindungsgemäßes Verfahren zur Herstellung eines Netzwerks zur sicheren Verbindung zwischen mehreren Knoten besteht in der Verbindung mehrerer Knoten zu einem Netzwerk und Kapseln des Netzwerkinterfaces wenigstens eines Knotens derart, dass alle zur Sicherstellung einer Mindestfunktionalität des Netzwerkinterfaces notwendigen Bestandteile eingeschlossen sind, und Zugriff von außerhalb der Kapselung ausschließlich über spezielle freigegebene Dienste (8a, 8b). Zur erfindungsgemäßen Herstellung eines sicheren Netzwerkes kann auch die Abfolge der ersten beiden Verfahrensschritte vertauscht werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt in allgemeiner Form schematisch eine erfindungsgemäße Vorrichtung.
Fig. 2 zeigt schematisch eine besonders komplexe Ausführung der Erfindung
Fig. 3 erläutert die Erfindung am Beispiel eines Ringbusses.

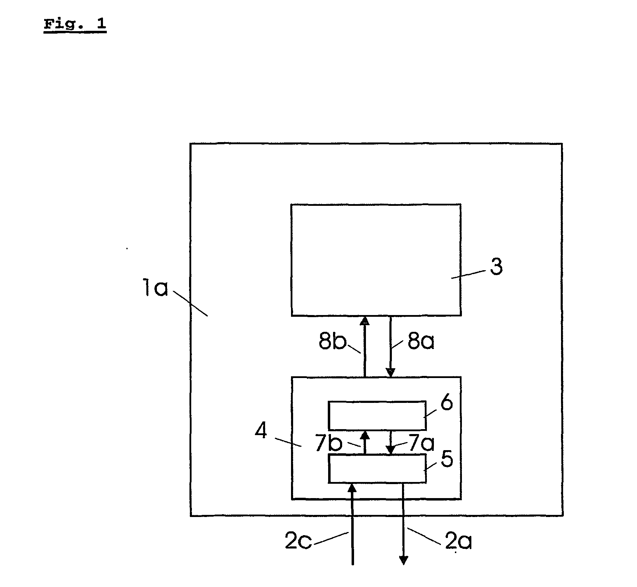

Fig. 1 zeigt in schematischer Form eine erfindungsgemäße Vorrichtung. Ein Busknoten (1a) weist Verbindungen (2a, 2b) zur Kommunikation mit anderen Busknoten auf. Die Kommunikation kann beispielsweise über optische sowie elektrische Verbindungen oder auch beispielsweise mittels Funkverbindungen erfolgen. Ebenso sind an Stelle der beiden skizzierten unidirektionalen Verbindungen auch eine bidirektionale Verbindung denkbar.

Weiterhin weist der Busknoten eine gekapselte Einheit (4) sowie eine Applikation (3) auf. Die Applikation steht hier stellvertretend für eine Vielzahl unterschiedlicher Funktionalitäten des Busknotens. Dieser Oberbegriff der Applikation kann außer dem entsprechenden OSI-Layer der Applikationsebene auch untergeordnete Ebenen, welche allerdings über den in der gekapselten Einheit vorgesehenen Ebenen stehen, aufweisen. So kann beispielsweise die Applikation i. S. dieser Bezeichnung ein Autoradio, ein Verstärker, ein Kommunikationssystem, ein Bremssystem etc. sein.

Die gekapselte Einheit (4) weist einen physikalischen Layer (5) auf, der die Kommunikationshardware zur physikalischen Verbindung mit anderen Busknoten enthält. Weiterhin weist die gekapselte Einheit übergeordnete Elemente (6), bevorzugt aus übergeordneten Layern auf. Diese können beispielsweise aus dem OSI-Layer 2 beziehungsweise 3 stammen. Darin kann beispielsweise das Management von Datenraten, Fehlererkennung, Flussregelung etc. enthalten sein. Eine Kommunikation der übergeordnete Elemente (6) mit den Elementen des physikalischen Layers (5) erfolgt über die internen Kommunikationswege (7a, 7b). Eine Kommunikation der Applikation (3) ist ausschließlich über die externen Kommunikationswege (8a, 8b) über spezielle Schnittstellen mit der gekapselten Einheit (4) möglich. Eine direkte Kommunikation beispielsweise mit dem physikalischen Layer ist hingegen nicht möglich.

Eine praktische Realisierung der gekapselten Einheit (4) könnte beispielsweise in einem abgeschlossenen Network Interface Controller bestehen, welcher nach außen hin zur Kommunikation die Verbindungen (2a, 2b) zu anderen Knoten sowie die Verbindungen (8a, 8b) zur Applikation aufweist.

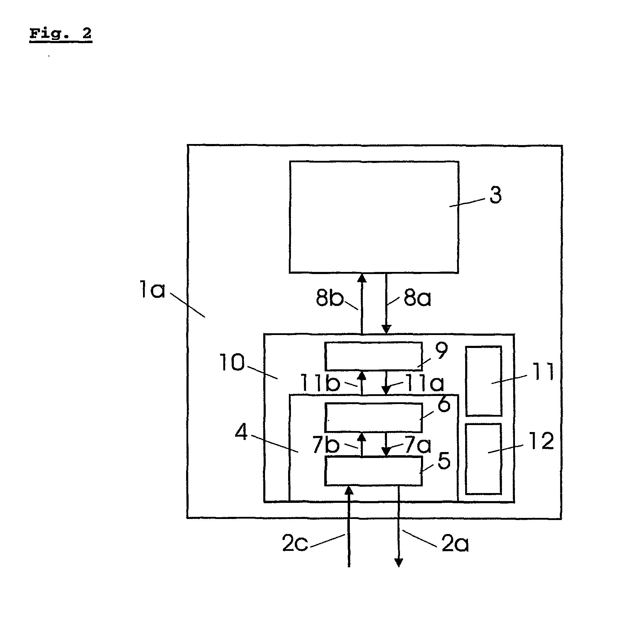

Fig. 2 zeigt schematisch eine besonders komplexe Ausführungsform der Erfindung. Hierbei sind zunächst die gleichen Komponenten mit den entsprechend gleichen Bezugszeichen wie in Fig. 1 vorhanden. Weiterhin ist eine zusätzliche übergeordnete Kapselung (10) vorgesehen. Diese schließt die gekapselte Einheit (4) sowie einen zusätzlichen über dieser übergeordneten Layer (9) mit ein. Dieser übergeordnete Layer (9) kommuniziert mittels der Kommunikationswege (11a, 11b) mit der gekapselten Einheit (4). Durch die hierarchische Kapselung ergibt sich eine erhöhte Zuverlässigkeit und Ausfallsicherheit. So könnte beispielsweise die innere gekapselte Einheit (4) als getrennte Hardware und die übergeordnete Kapselung beispielsweise in Form eines Protected Mode innerhalb eines Microcontrollers, der auch die Applikation bedient, realisiert sein. Ebenso könnte aber auch die gekapselten Einheit (4) durch Software, beispielsweise mittels eines Protected Mode innerhalb eines gemeinsamen Microcontrollers realisiert sein.

Zur Veranschaulichung zusätzlicher Einrichtungen ist noch eine Stromversorgung (12) vorgesehen, welche beispielsweise im Falle eines Ausfalls der Stromversorgung des restlichen Gerätes die Netzwerkkomponenten weiter versorgt und somit die Netzwerkfunktionalität weiter aufrecht erhält. Diese Stromversorgung kann beispielsweise von Komponenten der übergeordneten Kapselung (10) gesteuert werden, um das Netzwerkinterface in einem Standby - Modus zu bringen. Die Elemente außerhalb dieser Kapselung haben definitionsgemäß keinen Zugriff auf die Stromversorgung. Zusätzlich sind noch Sicherheitseinrichtungen (13) vorgesehen, welche beispielsweise analog eines Watchdog - Timers die Aktivitäten innerhalb der übergeordneten Kapselung überwachen.

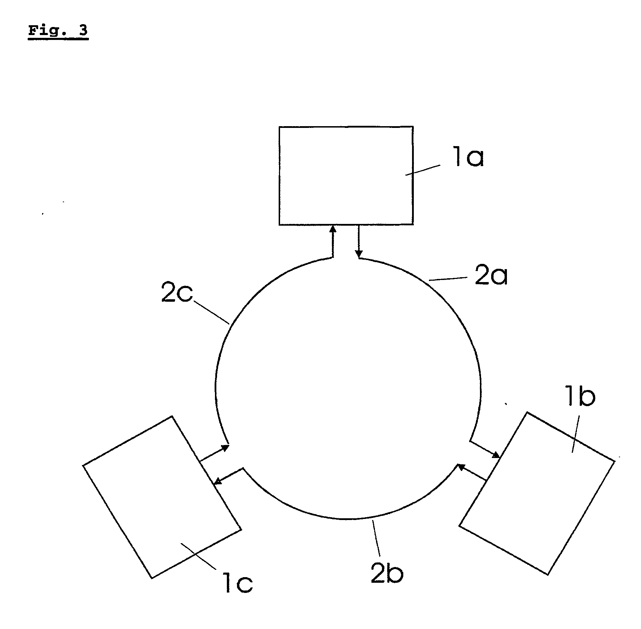

In Fig. 3 ist die Zusammenschaltung mehrerer Knoten in Form eines Ringbusses dargestellt. Die einzelnen Knoten (1a, 1b, 1c) kommunizieren über die zu einem Ring zusammengeschalteten Verbindungen (2a, 2b, 2c). So kann der erste Knoten (1a) mittels der ersten Verbindung (2a) Informationen an den zweiten Knoten (1b) übermitteln. Dieser kann Informationen über die zweite Verbindung (2b) an den dritten Knoten (1c) senden. Der Kreis wird durch die dritte Verbindung (2c) zwischen dem dritten Knoten und dem ersten Knoten geschlossen. Ist nun beispielsweise der zweite Knoten (1b) durch seine Applikation derart überlastet, dass er Datenpakete vom ersten Knoten nicht an den dritten Knoten weiterleiten kann, so ist auch die logische Verbindung zwischen dem ersten und dem dritten Knoten unterbrochen. Durch eine erfindungsgemäße Kapselung im Netzwerkinterface ist nun weiterhin der zweite Knoten in der Lage, die Datenpakete des ersten Knotens an den dritten Knoten weiterzuleiten. Somit hat die Überlastung des zweiten Knotens durch die Applikation keinerlei Auswirkungen auf die Übertragung der Daten auf dem Bus.

### Bezugszeichenliste

- 1a, 1b, 1c: Busknoten
- 2a, 2b, 2c: Verbindung zu anderen Knoten
- 3: Applikation
- 4: Gekapselte Einheit
- 5: Physikalischer Layer
- 6: Übergeordnete Elemente innerhalb der Kapselung
- 7a, 7b: Kommunikationswege innerhalb der Kapselung
- 8a, 8b: Externe Kommunikationswege zwischen Kapselung und Applikation
- 9: Übergeordnete Elemente innerhalb der übergeordneten Kapselung
- 10: Übergeordnete Kapselung
- 11a, 11b: Kommunikationswege innerhalb der übergeordneten Kapselung
- 12: Stromversorgung
- 13: Sicherheitseinrichtungen

## Patentansprüche

1. Netzwerkinterface mit einer Einheit (4),
- in der Einheit (4) die zur Sicherstellung einer Mindestfunktionalität des Netzwerkinterfaces notwendigen Bestandteile funktionell gekapselt sind,
- in der Einheit (4) die zur Sicherstellung Basisfunktionalität, welche eine Kommunikation mit dem Netzwerkinterface erlaubt, auch wenn mit der Einheit verbundene Hardware- und Softwarekomponenten nicht ordnungsgemäß arbeiten, notwendigen Hard- und Softwarebestandteile funktionell gekapselt sind,
- ein Zugriff auf die die Mindestfunktionalität sicherstellenden Hard- und Softwarebestandteile von außerhalb der gekapselten Einheit (4) nur über spezielle freigegebene Dienste möglich ist,
- Zugriffe über andere Dienste oder auch direkt auf die Hardware des Netzwerkinterfaces nicht möglich sind,
- die Kapselung der Einheit (4) von dem OSI-Layer 1 bis zu dem OSI-Layer 3 reicht, und
**dadurch gekennzeichnet, daß**
- eine zusätzliche Überwachungseinrichtung innerhalb der gekapselten Einheit (4) zur Überwachung der Funktion bzw. bestimmter Betriebsparameter von Komponenten außerhalb der gekapselten Einheit (4) vorgesehen ist, wobei im Fehlerfalle eine Signalisierung des Fehlers sowie wahlweise einen Reset der betroffenen Komponenten erfolgt.

2. Netzwerkinterface nach einem der vorstehenden Ansprüche,
**dadurch gekennzeichnet, daß** die Verwaltung von synchronen Streams in der Einheit (4) eingeschlossen ist.

3. Netzwerkinterface nach einem der vorstehenden Ansprüche,
**dadurch gekennzeichnet, daß**
in der Einheit (4) zusätzliche Überwachungs- und Steuerungsfunktionen (13) vorgesehen sind.

4. Netzwerkinterface nach einem der vorhergehenden Ansprüche,
**dadurch gekennzeichnet, dass**
vorzugsweise für den Einsatz in Netzwerken mit zumindest einer logischen Ringstruktur eine Funktion innerhalb der gekapselten Einheit (4) zur Paketweiterleitung vorgesehen ist.

5. Netzwerkinterface nach einem der vorhergehenden Ansprüche,
**dadurch gekennzeichnet, dass**
eine Funktion innerhalb der Einheit (4) vorgesehen ist, welche einen Reset der Komponenten und/oder Funktionen innerhalb der gekapselten Einheit (4) durch ein über das Netzwerk übertragenes Kommando ermöglicht.

6. Netzwerkinterface nach einem der vorhergehenden Ansprüche,
**dadurch gekennzeichnet, dass**
die Einheit (4) mit zusätzlichen externen Komponenten verbunden ist und zusätzliche Mittel zur Signalisierung des Resets an diese externen Komponenten wahlweise durch Hardware und/oder Software vorgesehen sind.

7. Netzwerkinterface nach einem der vorhergehenden Ansprüche,
**dadurch gekennzeichnet, dass**
eine zusätzliche Überwachungseinrichtung innerhalb der gekapselten Einheit (4) zur Überwachung des gesamten Netzwerkverkehrs und/oder der Funktion einzelner Knoten, auch des eigenen Knoten, vorgesehen ist, welche im Falle von Fehlfunktionen selektive Kommandos zum Reset wahlweise einzelner Knoten, der daran angeschlossenen Geräte, oder auch des gesamten über das Netzwerk verbundenen Systems absetzt.

8. Netzwerkinterface nach einem der vorhergehenden Ansprüche,
**dadurch gekennzeichnet, dass**
die gekapselte Einheit (4) als Komponente in ein Gerät integriert ist, wobei optional die zur Aufrechterhaltung einer Basisfunktionsfähigkeit notwendigen Hardwarekomponenten der gekapselten Einheit (4), insbesondere die Komponenten des OSI-Layers 1 eine Stromversorgung aufweisen, welche unabhängig von der Stromversorgung des restlichen Gerätes ist.

9. Netzwerkinterface nach einem der vorhergehenden Ansprüche,
**dadurch gekennzeichnet, dass**
die gekapselte Einheit (4) die optischen Komponenten für einen optischen Bus umfasst und derart ausgebildet ist, dass sie die ausschließliche Steuereinrichtung zur Steuerung des optischen Senders darstellt.

10. Netzwerkinterface nach einem der vorhergehenden Ansprüche,
**dadurch gekennzeichnet, dass**
Firmware oder Software über das Netzwerk neu programmierbar und in Speichern wie zum Beispiel Flash-Roms speicherbar ist.

11. Netzwerkknoten mit einem Netzwerkinterface nach einem der vorstehenden Ansprüche.

12. Netzwerk in dem mindestens ein Netzwerkknoten nach dem vorstehenden Anspruch mit mindestens einem weiteren Netzwerkknoten verbunden ist.

13. Verfahren zur Herstellung eines Netzwerks zur sicheren Verbindung zwischen mehreren Busknoten,
**gekennzeichnet durch**
Verbinden von mehreren Netzwerkknoten nach dem Anspruch 11 zu einem Netzwerk.

## Claims

1. A network interface with a unit (4),
- the components necessary for ensuring a minimum functionality of the network interface are functionally encapsulated in the unit (4);
- the hardware and software components necessary for ensuring basic functionality are functionally encapsulated in the unit (4), which basic functionality allows communication with the network interface even if the hardware and software components connected with the unit do not work properly;
- access from outside the encapsulated unit (4) to the hardware and software components which ensure minimum functionality is only possible via specially enabled services;
- access is not possible via other services or even directly to the hardware of the network interface;
- the encapsulation of the unit (4) reaches from OSI layer 1 up to OSI layer 3,
**characterized in that**
- an additional monitoring device is provided within the encapsulated unit (4) for monitoring the function or certain operating parameters of components outside the encapsulated unit (4), with a signaling of the error and optionally a reset of the affected components occurring in the case of fault.

2. A network interface according to one of the preceding claims, **characterized in that** the management of synchronous streams in the unit (4) is included.

3. A network interface according to one of the preceding claims, **characterized in that** additional monitoring and control functions (13) are provided in the unit (4).

4. A network interface according to one of the preceding claims, **characterized in that** a function is provided within the encapsulated unit (4) for packet retransmission, preferably for use in networks with at least one logical ring structure.

5. A network interface according to one of the preceding claims, **characterized in that** a function is provided within the unit (4) which enables a reset of the components and/or functions within the encapsulated unit (4) by means of a command sent via the network.

6. A network interface according to one of the preceding claims, **characterized in that** the unit (4) is connected with additional external components and additional means are provided for signaling the reset to said external components optionally by hardware and/or software.

7. A network interface according to one of the preceding claims, **characterized in that** an additional monitoring device is provided within the encapsulated unit (4) for monitoring the entire network traffic and/or the function of individual nodes, which also includes the own node, which monitoring device, in the event of malfunctions, sends selective commands for reset of optionally individual nodes, devices connected thereto, or even the entire system connected via the network.

8. A network interface according to one of the preceding claims, **characterized in that** the encapsulated unit (4) is integrated as a component in a device, with the hardware components of the encapsulated unit (4) which are necessary for maintaining a basic functionality, especially the components of OSI layer 1, having a power supply which is independent of the power supply of the remainder of the device.

9. A network interface according to one of the preceding claims, **characterized in that** the encapsulated unit (4) comprises the optical components for an optical bus and is arranged in such a way that it represents the exclusive control device for controlling the optical transmitter.

10. A network interface according to one of the preceding claims, **characterized in that** the firmware or software can be newly programmed via the network and can be stored in memories such as flash ROMs for example.

11. A network node with a network interface according to one of the preceding claims.

12. A network in which at least one network node according to the preceding claim is connected with at least one further network node.

13. A method for producing a network for secure connection between several bus nodes, **characterized by** the connection of several network nodes according to claim 11 into a network.

## Revendications

1. Interface réseau avec une unité (4),
- les composants nécessaires pour assurer une fonctionnalité minimum de l'interface réseau sont encapsulés fonctionnellement dans l'unité (4),
- les composants matériels et logiciels nécessaires pour assurer les fonctionnalités de base permettant une communication avec l'interface réseau, même lorsque les composants matériels et logiciels connectés à l'unité ne fonctionnent pas correctement, sont encapsulés fonctionnellement dans l'unité (4),
- un accès aux composants matériels et logiciels assurant une fonctionnalité minimum n'est possible depuis l'extérieur de l'unité encapsulée (4) que par des services spécialement autorisés,
- l'accès par d'autres services ou directement sur le matériel de l'interface réseau n'est pas possible,
- l'encapsulation de l'unité (4) va du niveau OSI Layer 1 à OSI Layer 3,
**caractérisée en ce que** :
- un dispositif de surveillance supplémentaire est prévu à l'intérieur de l'unité encapsulée (4) pour surveiller le fonctionnement ou certains paramètres d'exploitation de composants extérieurs à l'unité encapsulée (4), une signalisation du défaut et optionnellement une réinitialisation des composants 1 concernés étant effectuées en cas de défaut.

2. Interface réseau selon l'une des revendications précédentes, **caractérisée en ce que** la gestion de flux synchrones est incluse dans l'unité (4).

3. Interface réseau selon l'une des revendications précédentes, **caractérisée en ce que** des fonctions de surveillance et de commande (13) supplémentaires sont prévues dans l'unité (4).

4. Interface réseau selon l'une des revendications précédentes, **caractérisée en ce qu'**il est de préférence prévu, en vue de l'utilisation dans les réseaux ayant au moins une structure logique en anneau, une fonction incluse dans l'unité encapsulée (4) pour la transmission de paquets.

5. Interface réseau selon l'une des revendications précédentes, **caractérisée en ce qu'**il est prévu à l'intérieur de l'unité (4) une fonction qui permet de réinitialiser les composants et/ou les fonctions à l'intérieur de l'unité encapsulée (4) à l'aide d'une commande transmise par le réseau.

6. Interface réseau selon l'une des revendications précédentes, **caractérisée en ce que** l'unité (4) est connectée à des composants externes supplémentaires et des moyens supplémentaires sont prévus pour signaler les réinitialisations à ces composants externes, au choix par le matériel et/ou le logiciel.

7. Interface réseau selon l'une des revendications précédentes, **caractérisée en ce qu'**il est prévu un dispositif de surveillance supplémentaire à l'intérieur de l'unité encapsulée (4) pour surveiller tout le trafic sur le réseau et/ou le fonctionnement de certains noeuds, y compris des noeuds propres, qui en cas de défaut de fonctionnement active des commandes sélectives pour réinitialiser sélectivement certains noeuds, les appareils qui leur sont connectés ou l'ensemble du système connecté par le réseau.

8. Interface réseau selon l'une des revendications précédentes, **caractérisée en ce que** l'unité encapsulée (4) est intégrée comme composant dans un appareil, et facultativement, les composants matériels de l'unité encapsulée (4) nécessaires pour maintenir une capacité de fonctionnement de base, en particulier les composants du niveau OSI Layer 1, présentent une alimentation électrique indépendante de l'alimentation électrique du reste de l'appareil.

9. Interface réseau selon l'une des revendications précédentes, **caractérisée en ce que** l'unité encapsulée (4) contient les composants optiques d'un bus optique et est conçue de telle manière qu'elle représente le dispositif de commande exclusif pour la commande de l'émetteur optique.

10. Interface réseau selon l'une des revendications précédentes, **caractérisée en ce qu'**un firmware ou un logiciel peut être reprogrammé en passant par le réseau et enregistré dans des mémoires, par exemple des Flash-ROM.

11. Noeud de réseau avec une interface réseau selon l'une des revendications précédentes.

12. Réseau dans lequel au moins un noeud de réseau selon la revendication précédente est connecté avec au moins un autre noeud de réseau.

13. Procédé pour la fabrication d'un réseau pour une connexion sécurisée entre deux noeuds de bus, **caractérisé en ce que** plusieurs noeuds de réseau selon la revendication 11 sont connectés pour former un réseau.
